# FASCICULE DE BREVET EUROPEEN

(11) **EP 1 541 343 B1**
(45) Date de publication et mention de la délivrance du brevet: **30.04.2008**
(21) Numéro de dépôt: 04292761.6
(22) Date de dépôt: 24.11.2004
(51) Int. Cl.: B32B 27/32, C08L 27/12, C08L 27/16, C08L 51/00

(54) **Utilisation d'une structure à base de polymère fluoré greffé pour le stockage et le transport de produits chimiques**
Verwendung einer Struktur auf Basis eines gepfropften Fluorpolymeren für die Aufbewahrung und den Transport von chemischen Produkten.
Use of a structure based on grafted fluoropolymers for storage and transport of chemical products

(30) Priorité: 02.12.2003 FR 0314111
(43) Date de publication de la demande: 15.06.2005
(73) Titulaire: ARKEMA FRANCE, 92700 Colombes (FR)
(72) Inventeur: Bonnet, Anthony, 27170 Beaumont le Roger (FR); Chopinez, Fabrice, 27000 Evreux (FR); Sebire, Pascal, 27300 Saint-Aubin le Vertueux (FR); Werth, Michael, 27300 Bernay (FR)

(56) Documents cités:
- EP-A- 0 696 301
- US-A- 4 749 607
- US-A- 5 589 028

## Description

La présente invention concerne une structure à base de polymère fluoré sur lequel a été greffé par irradiation un monomère insaturé utilisée pour le stockage et le transport de produits chimiques. Plus précisément, cette structure comprend au moins une couche de polymère fluoré sur lequel a été greffé par irradiation un monomère insaturé et au moins une couche de polyoléfine. Cette structure peut être par exemple sous la forme de bouteilles, de réservoirs, de tuyaux ou de conteneurs. On entend par "produits chimiques" au sens de la présente invention des produits corrosifs, dangereux ou même des produits dont on veut préserver la pureté et donc qui ne doivent pas être contaminés par le réservoir dans lequel on les stocke. Ces structures peuvent être fabriquées par rotomoulage, extrusion ou extrusion-soufflage. Ces techniques sont connues en elles-mêmes.

### L'art antérieur et le problème technique

Les polymères fluorés, par exemple ceux à base de fluorure de vinylidène CF₂=CH₂ (VDF) tels que le PVDF (polyfluorure de vinylidène) sont connus pour offrir d'excellentes propriétés de stabilité mécanique, une très grande inertie chimique, ainsi qu'une bonne résistance au vieillissement. Cependant cette inertie chimique des polymères fluorés fait qu'il est difficile de les coller ou de les associer à d'autres matériaux.

Le brevet EP558373 décrit un tube pour le transport d'essence comprenant respectivement une couche extérieure en polyamide, une couche de liant et une couche intérieure en contact avec l'essence et constituée de polymère fluoré (avantageusement du PVDF,abréviation de polyfluorure de vinylidène). La perméabilité à l'essence est parfaite mais la tenue aux chocs n'est pas suffisante.

Les brevets EP696301, EP740754 et EP726926 décrivent des tubes pour le transport d'essence comprenant respectivement une couche extérieure en polyamide, une couche de liant, une couche de PVDF (polyfluorure de vinylidène), une couche de liant et une couche intérieure en polyamide en contact avec l'essence. La perméabilité et la tenue aux chocs sont très bons mais selon la nature du polyamide et le dispositif de coextrusion utilisé pour fabriquer ce tube il peut être nécessaire d'ajouter un plastifiant dans la couche intérieure de polyamide. Il en résulte que ce plastifiant peut exsuder et être entrainé par l'essence ce qui peut provoquer un bouchage du tube ou du dispositif d'injection de l'essence dans le moteur.

Le brevet EP1243832 décrit un tube qui comprend une couche extérieure de polyamide, une couche constituée d'un mélange d'un fluoro polymère et d'un méthacrylate d'alcoyle possédant sur sa chaîne des fonctions réactives et une couche intérieure constituée d'un mélange à matrice polyamide et phase dispersée en polyoléfine en contact avec l'essence.

Dans ces documents de l'art antérieur il n'est pas décrit de couche de polymère fluoré greffé sur lequel a été greffé par irradiation un monomère insaturé. De plus ces tubes, habituellement de diamètre extérieur 8 mm, comprennent une couche de polyamide et ils sont surtout utiles dans les automobiles pour amener l'essence du réservoir jusqu'au dispositif d'injection dans le moteur.

Le brevet DE4343002 décrit des réservoirs d'essence en PEHD (polyéthylène haute densité) et qu'on a traités à l'intérieur avec de l'acide fluorhydrique pour former une couche intérieure en contact avec l'essence qui est plus étanche à l'essence que le PEHD.

La demande de brevet JP62112605A publiée le 23 mai 1987 décrit la fluoration d'un copolymère éthylène-diène par l'acide fluorhydrique pour former un film étanche. Cette technique oblige à traiter l'objet moulé, soufflé ou extrudé avec un gaz difficile et dangereux à manipuler.

Le brevet US4749607 décrit un système multicouche comprenant une couche d'un polymère thermoplastique halogéné modifié et une couche d'une polyoléfine modifiée. Le polymère thermoplastique halogéné modifié peut être un polymère fluoré dans lequel des fonctions polaires ont été incorporées soit par copolymérisation directe soit par greffage chimique à l'aide d'un amorceur radicalaire.

Dans ces documents de l'art antérieur, il n'est pas décrit de polymère fluoré sur lequel a été greffé par irradiation un monomère insaturé.

On sait maintenant produire des polymères fluorés sur lesquels a été greffé par irradiation un monomère insaturé et faire des structures dans lesquelles ces polymères fluorés modifiés sont des liants entre des polyoléfines et un polymère fluoré. Par la suite, un polymère fluoré sur lequel a été greffé par irradiation un monomère insaturé sera désigné pour simplifier par polymère fluoré greffé par irradiation.

Ces polymères fluorés greffés par irradiation peuvent aussi former une couche adhérente sur une polyoléfine, on obtient alors une structure ayant une couche résistante chimiquement et en plus barrière sans ajouter une autre couche de polymère fluoré. Ces structures sont plus faciles à fabriques que celles de l'art antérieur et dans lesquelles il faut faire une fluoration par l'acide fluorhydrique. L'utilisation de telles structures pour le stockage et le transport de produits chimiques n'a pas été décrite dans l'art antérieur.

### Brève description de l'invention

Selon une **première forme** la présente invention concerne l'utilisation pour le stockage et le transport de produits chimiques d'une structure comprenant :
une couche intérieure en contact avec le fluide à stocker ou à transporter constituée de polymère fluoré greffé par irradiation et directement attachée à celle-ci une couche extérieure de polyoléfine.

Selon une variante la couche de polymère fluoré greffé par irradiation est remplacée par une couche d'un mélange de polymère fluoré greffé par irradiation et d'un polymère fluoré, de préférence du PVDF.

Selon une autre variante, la structure comprend une couche de polymère fluoré, de préférence du PVDF, disposée du coté du polymère fluoré greffé par irradiation. C'est à dire que la structure comprend successivement une couche de polymère fluoré, de préférence du PVDF, une couche constituée de polymère fluoré greffé par irradiation (éventuellement en mélange avec un polymère fluoré) et directement attachée à celle ci une couche extérieure de polyoléfine. La couche de polymère fluoré greffé par irradiation est une couche de liant entre la couche de PVDF et la couche de polyoléfine. La couche intérieure en contact avec les produits chimiques est donc soit une couche de polymère fluoré greffé par irradiation soit une couche de polymère fluoré (de préférence du PVDF) soit une couche d'un mélange de polymère fluoré greffé par irradiation et d'un polymère fluoré, de préférence du PVDF.

Selon une **deuxième forme** la présente invention concerne l'utilisation pour le stockage et le transport de produits chimiques d'une structure comprenant :
une couche centrale constituée de polymère fluoré greffé par irradiation et directement attachée à celle-ci une couche extérieure de polyoléfine et une couche intérieure de polyoléfine. La couche intérieure de polyoléfine est la couche en contact avec les produits chimiques.

Selon une variante, la couche de polymère fluoré greffé par irradiation est remplacée par une couche d'un mélange de polymère fluoré greffé par irradiation et d'un polymère fluoré, de préférence du PVDF.

Selon une **troisième forme**, la présente invention concerne l'utilisation pour le stockage et le transport de produits chimiques d'une structure comprenant :
une couche centrale constituée de polyoléfine et directement attachée à celle-ci une couche extérieure de polymère fluoré greffé par irradiation et une couche intérieure de polymère fluoré greffé par irradiation.

Selon une variante, au moins l'une des couches de polymère fluoré greffé par irradiation est remplacée par une couche d'un mélange de polymère fluoré greffé par irradiation et d'un polymère fluoré, de préférence du PVDF.

Selon une autre variante, au moins l'une des couches de polymère fluoré greffé par irradiation (éventuellement en mélange avec un polymère fluoré) est recouverte d'une couche de polymère fluoré, de préférence du PVDF. La couche de polymère fluoré greffé par irradiation est une couche de liant entre la couche de PVDF et la couche de polyoléfine. La couche intérieure en contact avec les produits chimiques est donc soit une couche de polymère fluoré greffé par irradiation soit une couche de polymère fluoré (de préférence du PVDF) soit une couche d'un mélange de polymère fluoré greffé par irradiation et d'un polymère fluoré, de préférence du PVDF.

Dans les structures précédentes, on peut disposer entre la couche de polymère fluoré greffé par irradiation (ou la couche contenant le polymère fluoré greffé par irradiation) et la (ou les) couche(s) de polyoléfine, une couche de polyoléfine fonctionnalisée ayant des fonctions capables de réagir avec les fonctions greffées sur le polymère fluoré. Par exemple, si on a greffé de l'anhydride maléique sur le polymère fluoré, la couche de polyoléfine fonctionnalisée est constituée d'un copolymère de l'éthylène, du méthacrylate de glycidyle et éventuellement d'un acrylate d'alkyle éventuellement en mélange avec du polyéthylène.

Dans les structures précédentes, la couche intérieure en contact avec le fluide à stocker ou à transporter peut contenir du noir de carbone, des nanotubes de carbone ou tout autre additif capable de la rendre conductrice pour éviter l'accumulation d'électricité statique.

Ces structures peuvent être fabriquées par rotomoulage, extrusion ou extrusion-soufflage. Ces techniques sont connues en elles-mêmes.

L'invention concerne aussi à titre d'objet nouveau les structures utilisées dans la troisième forme de l'invention.

**S'agissant du polymère fluoré greffé par irradiation,** celui-ci est obtenu par un procédé de greffage par irradiation d'un monomère insaturé sur un polymère fluoré.

Le polymère fluoré est au préalable mélangé au monomère insaturé par toutes les techniques de mélange en milieu fondu connues de l'art antérieur. L'étape de mélange s'effectue dans tout dispositif de mélange tel que des extrudeuses ou des malaxeurs utilisés dans l'industrie des thermoplastiques. De préférence, on utilisera une extrudeuse pour mettre le mélange sous forme de granulés.

Puis, le mélange du polymère fluoré et du monomère insaturé est irradié à l'état solide à l'aide d'une source électronique ou photonique sous une dose d'irradiation comprise entre 10 et 200 kGray, de préférence entre 10 et 150 kGray. L'irradiation grâce à une bombe au cobalt 60 est particulièrement préféré.

Il en résulte un greffage du monomère insaturé à hauteur de 0,1 à 5% en poids (c'est-à-dire que le monomère insaturé greffé correspond à 0,1 à 5 parts pour 99,9 à 95 parts de polymère fluoré), avantageusement de 0,5 à 5%, de préférence de 1 à 5%. La teneur en monomère insaturé greffé dépend de la teneur initiale du monomère insaturé dans le mélange polymère fluoré /monomère insaturé à irradier. Elle dépend aussi de l'efficacité du greffage, donc de la durée et de l'énergie de l'irradiation.

Le monomère insaturé qui n'a pas été greffé ainsi que les résidus libérés par le greffage notamment le HF sont ensuite éliminés. Cette opération peut être réalisée selon les techniques connues de l'homme de l'art. Un dégazage sous vide peut être appliqué, éventuellement en appliquant en même temps un chauffage. Il est également possible de dissoudre le polymère fluoré modifié dans un solvant adéquat tel que par exemple la N-méthyl pyrrolidone, puis de précipiter le polymère dans un non-solvant, par exemple dans l'eau ou bien dans un alcool.

C'est là l'un des avantages de ce procédé de greffage par irradiation que de pouvoir obtenir des teneurs en monomère insaturé greffé plus élevées qu'avec les procédés de greffage classiques utilisant un amorceur radicalaire. Ainsi, typiquement, avec le procédé de greffage par irradiation, il est possible d'obtenir des teneurs supérieures à 1 % (1 part de monomère insaturé pour 99 parts du polymère fluoré), voire même supérieure à 1,5%, alors qu'avec un procédé de greffage classique en extrudeuse, la teneur est de l'ordre de 0,1 à 0,4%.

D'autre part, le greffage par irradiation a lieu à « froid », typiquement à des températures inférieures à 100°C, voire 70°C, de sorte que le mélange du polymère fluoré et du monomère insaturé n'est pas à l'état fondu comme pour un procédé de greffage classique en extrudeuse. Une différence essentielle est donc que, dans le cas d'un polymère fluoré semi-cristallin (comme c'est le cas avec le PVDF par exemple), le greffage a lieu dans la phase amorphe et non dans la phase cristalline alors qu'il se produit un greffage homogène dans le cas d'un greffage en extrudeuse à l'état fondu. Le monomère insaturé ne se répartit donc pas identiquement sur les chaînes du polymère fluoré dans le cas du greffage par irradiation et dans le cas du greffage en extrudeuse. Le produit fluoré modifié présente donc une répartition différente du monomère insaturé sur les chaînes du polymère fluoré par rapport à un produit qui serait obtenu par un greffage en extrudeuse.
Durant cette étape de greffage, il est préférable d'éviter la présence d'oxygène. Un balayage à l'azote ou à l'argon du mélange polymère fluoré / monomère insaturé est donc possible pour éliminer l'oxygène.

Le polymère fluoré greffé par irradiation ainsi obtenu peut être utilisé tel quel ou en mélange soit avec le même polymère fluoré mais non greffé, soit avec un autre polymère fluoré soit avec un autre polymère tel que par exemple un polymère acrylique. A titre d'exemple de polymère acrylique, on peut citer le PMMA et les modifiants choc de type core shell (coeur écorce).

### Description détaillée de l'invention

On décrit d'abord le polymère fluoré greffé par irradiation.

**S'agissant du polymère fluoré** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère, on peut citer le fluorure de vinyle; le fluorure de vinylidène (VDF); le trifluoroethylène (VF3); le chlorotrifluoroéthylène (CTFE); le 1,2-difluoroéthylène; le tétrafluoroethylène (TFE); l'hexafluoropropylène (HFP); les perfluoro(alkyl vinyl) éthers tels que le perfluoro(methyl vinyl)éther (PMVE), le perfluoro(éthyl vinyl) éther (PEVE) et le perfluoro(propyl vinyl) éther (PPVE); le perfluoro(1,3 -dioxole); le perfluoro(2,2-diméthyl-1,3-dioxole) (PDD); le produit de formule CF₂=CFOCF₂CF(CF₃)OCF₂CF₂X dans laquelle X est SO₂F, CO₂H, CH₂OH, CH₂OCN ou CH₂0PO₃H; le produit de formule CF₂=CFOCF₂CF₂SO₂F; le produit de formule F(CF₂)nCH₂0CF=CF₂ dans laquelle n est 1, 2, 3, 4 or 5; le produit de formule R₁CH₂OCF=CF₂ dans laquelle R₁ est l'hydrogene ou F(CF₂)z et z vaut 1, 2, 3 ou 4; le produit de formule R₃OCF=CH₂ dans laquelle R₃ est F(CF₂)z- et z est 1, 2, 3 or 4; le perfluorobutyl ethylene (PFBE); le 3,3,3-trifluoropropene et le 2-trifluoromethyl-3 ,3 ,3 -trifluoro- 1-propene.

Le polymère fluoré peut être un homopolymère ou un copolymère, il peut aussi comprendre des monomères non fluorés tels que l'éthylène.

A titre d'exemple le polymère fluoré est choisi parmi :
- Les homo- et copolymères du fluorure de vinylidène (VDF) contenant de préférence au moins 50% en poids de VDF, le copolymère étant choisi parmi le chlorotrifluoroéthylène (CTFE), l'hexafluoropropylène (HFP), le trifluoroéthylène (VF3) et le tétrafluoroéthylène (TFE),
- les homo- et copolymères du trifluoroéthylène (VF3),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VDF et/ou VF3.

Avantageusement le polymère fluoré est du poly(fluorure de vinylidène) (PVDF) homopolymère ou copolymère. De préférence le PVDF contient, en poids, au moins 50% de VDF, plus préférentiellement au moins 75% et mieux encore au moins 85%. Le comonomère est avantageusement l'HFP.

Avantageusement, le PVDF a une viscosité allant de 100 Pa.s à 2000 Pa.s, la viscosité étant mesurée à 230°C, à un gradient de cisaillement de 100 s⁻¹ à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

Ainsi, les PVDF commercialisés sous la marque KYNAR® 710 ou 720 sont parfaitement adaptés pour cette formulation.

**S'agissant du monomère insaturé,** celui-ci possède au moins une double liaison C=C ainsi qu'au moins une fonction polaire qui peut être une fonction :
- acide carboxylique,
- sel d'acide carboxylique,
- anhydride d'acide carboxylique,
- époxyde,
- ester d'acide carboxylique,
- silyle,
- amide carboxylique,
- hydroxy,
- isocyanate.
Des mélanges de plusieurs monomères insaturés sont également envisageables.

Des acides dicarboxyliques insaturés ayant 4 à 10 atomes de carbone et leurs dérivés fonctionnels, particulièrement leurs anhydrides, sont des monomères de greffage particulièrement préférés.
Citons à titre d'exemples de monomères insaturés l'acide méthacrylique, l'acide acrylique, l'acide maléïque, l'acide fumarique, l'acide itaconique, l'acide citraconique, l'acide undécylénique, l'acide allylsuccinique, l'acide cyclohex-4-ène-1,2-dicarboxylique, l'acide 4-méthyl-cyclohex-4-ène-1,2-dicarboxylique, l'acide bicyclo(2,2,1)hept-5-ène-2,3-dicarboxylique, l'acide x― méthylbicyclo(2,2,1-hept-5-ène-2,3-dicarboxylique, l'undécylénate de zinc, de calcium ou de sodium, l'anhydride maleïque, l'anhydride itaconique, l'anhydride citraconique, l'anhydride dichloromaléïque, l'anhydride difluoromaléïque, l'anhydride itaconique, l'anhydride crotonique, l'acrylate ou le méthacrylate de glycidile, l'allyl glycidyl éther, les vinyles silanes tel que le vinyl triméthoxysilane, le vinyl triéthoxysilane, le vinyl triacétoxysilane, le γ-méthacryloxypropyltriméthoxysilane.

D'autres exemples de monomères insaturés comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de monoéthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N―monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que l'acrylate de sodium, le méthacrylate de sodium, l'acrylate de potassium, et le méthacrylate de potassium.

Avantageusement on utilise l'anhydride maléique.

De par la présence d'une double liaison C=C sur le monomère isnaturé, il n'est pas exclu que le monomère insaturé polymérise pour donner des chaînes de polymère soit greffées sur le polymère fluoré, soit libres c'est-à-dire non-attachées au polymère fluoré. On entend par chaîne de polymère un enchaînement de plus de 10 unités du monomère insaturé. Dans le cadre de l'invention, afin de favoriser les propriétés d'adhésion du polymère fluoré, il est préférable de limiter la présence de chaînes de polymère greffées ou libres, donc de chercher à obtenir des chaînes de moins de 10 unités du monomère insaturé. De préférence, on se limitera à des chaînes de moins de 5 unités du monomère insaturé, et de manière encore plus préférée de moins de 2 unités de monomère insaturé.

De même, il n'est pas exclu qu'il y ait plus d'une double liaison C=C sur le monomère insaturé. Ainsi par exemple, des monomères insaturés tels que le méthacrylate d'allyle, le triméthacrylate de triméthylolpropane ou bien le diméthacrylate d'éthylène glycol peuvent être utilisés. Cependant, la présence de plus d'une double liaison dans ces composés peut conduire à une réticulation du polymère fluoré, donc à une modification des propriétés rhéologiques voire même à la présence de gels, ce qui n'est pas souhaité. Il peut alors être difficile d'obtenir un bon rendement du greffage tout en limitant la réticulation. Aussi, les monomères insaturés ne contenant qu'une seule double liaison C=C sont préférés. Les monomères isnaturés préférés sont donc ceux possédant une seule double liaison C=C et au moins une fonction polaire.

De ce point de vue, l'anhydride maléïque tout comme les undécylénates de zinc, calcium et sodium constituent de bons composés greffables car ils ont peu tendance à polymériser ni même à donner lieu à une réticulation. L'anhydride maléïque est tout particulièrement préféré.

S'agissant des proportions du polymère fluoré et du monomère insaturé la proportion de polymère fluoré est avantageusement, en poids, de 90 à 99,9% pour respectivement 0,1 à 10% de monomère insaturé. De préférence la proportion de polymère fluoré est de 95 à 99,9% pour respectivement 0,1 à 5% de monomère insaturé.

A l'issue de l'étape de mélange, on constate que le mélange du polymère fluoré et du monomère insaturé a perdu environ de 10 à 50% du monomère insaturé qu'on avait introduit au début de l'étape de mélange. Cette proportion dépend de la volatilité et de la nature du monomère insaturé. En fait le monomère a été dégazé dans l'extrudeuse ou le mélangeur et il est recupéré dans les circuits d'évents.

S'agissant de l'étape de graffage proprement dite, les produits récupérés à l'issue de l'étape de mélange sont avantageusement conditionnés en sacs de polyéthylène et l'air est chassé puis ils sont fermés. Quant à la méthode d'irradiation, on pourra utiliser sans distinction l'irradiation électronique plus connue sous la dénomination irradiation béta et l'irradiation photonique plus connue sous la dénomination irradiation gamma. Avantageusement la dose est comprise entre 2 et 6 Mrad et de préférence entre 3 et 5 Mrad.

S'agissant de l'étape d'élimination du monomère insaturé non greffé et des résidus libérés par le greffage, il est possible d'utiliser toute technique connue de l'homme de l'art. La proportion de monomère greffé par irradiation par rapport au monomère présent au début de l'étape de mélange est comprise entre 50 et 100%. On peut laver avec des solvants inertes vis-à-vis du polymère fluoré et des fonctions greffées par irradiation. Par exemple quand on greffe de l'anhydride maléique on peut laver au chlorobenzène. On peut aussi plus simplement dégazer en mettant sous vide le produit récupéré à l'issue de l'étape de greffage, éventuellement en chauffant.

**On décrit maintenant les structures utilisées dans les trois formes de l'invention.** Ces structures peuvent être de toutes tailles. Par exemple, les tuyaux sont tels qu'avantageusement le diamètre extérieur est entre 10 et 100 mm et l'épaisseur entre 1 et 5 mm. Elles peuvent être des conteneurs ou des réservoirs allant de quelques litres à plusieurs m³ ou des bouteilles de 0,05 litres à quelques litres. L'épaisseur de ces réservoirs, bouteilles ou conteneurs peut être de 1 ou 2 mm jusqu'à 20 mm. Le polymère fluoré qu'on peut mélanger au polymère fluoré greffé par irradiation est avantageusement du PVDF homopolymère ou copolymère. Les proportions en poids peuvent être de 1 à 90% de PVDF et de façon préférable de 20 à 60%. La couche de polymère fluoré qu'on peut ajouter contre la couche de polymère fluoré greffé par irradiation dans les première et troisième formes est avantageusement en PVDF homopolymère ou copolymère. La couche de polyoléfine peut être en polyéthylène ou en polypropylène. Avantageusement, il s'agit de PEHD. A titre d'exemple, on peut citer le FINATHENE 3802 de la société ATOFINA, sa densité est de 0,938, et il présente un MVI (Melt Volume Index ou indice de fluidité en volume à l'état fondu) de 0,2 cm³/10 min (à 190°C sous 2,16 kg). Les produits chimiques peuvent être de nombreux produits mais ce n'est pas de l'essence. On peut citer par exemple le brome et les acides (par exemple l'acide sulfurique). Quant à la couche de polyoléfine fonctionnelle qu'on peut insérer entre la couche de polymère fluoré greffé par irradiation et la couche de polyoléfine c'est avantageusement une polyoléfine contenant un époxyde puisque le polymère fluoré greffé est avantageusement greffé par un anhydride d'acide.

Cette polyoléfine fonctionnelle est soit un copolymère de l'éthylène et d'un époxyde insaturé soit une polyoléfine greffée par un époxyde insaturé.

S'agissant de la polyoléfine greffée par un époxyde insaturé, on entend par polyoléfine les polymères comprenant des motifs oléfines tels que par exemple des motifs éthylène, propylène, butène-1 ou tout autre alpha oléfine.

A titre d'exemple, on peut citer
- les polyéthylènes tels que les LDPE, HDPE, LLDPE ou VLDPE, le polypropylène, les copolymères éthylène / propylène, les EPR (éthylène / propylène Rubber) ou encore les PE métallocènes (copolymères obtenus par catalyse monosite),
- les copolymères blocs styrène / éthylène-butène / styrène (SEBS), les copolymères blocs styrène / butadiène / styrène (SBS), les copolymères blocs styrène / isoprène / styrène (SIS), les copolymères blocs styrène / éthylène-propylène / styrène, les éthylène / propylène / diène (EPDM) ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, l'indice de fluidité (MFI) peut être compris entre 0,3 et 40 (en g/10 min à 190°C sous 2,16 kg).

S'agissant des copolymères de l'éthylène et d'un époxyde insaturé on peut citer par exemple les copolymères de l'éthylène d'un (meth)acrylate d'alkyle et d'un époxyde insaturé ou les copolymères de l'éthylène, d'un ester vinylique d'acide carboxylique saturé et d'un époxyde insaturé. La quantité époxyde peut être jusqu'à 15 % en poids du copolymère et la quantité d'éthylène d'au moins 50 % en poids. Avantageusement la proportion d'époxyde est comprise entre 2 et 10% en poids. Avantageusement la proportion de (meth)acrylate d'alkyle est comprise entre 0 et 40% en poids et de préférence entre 5 et 35% en poids.

Avantageusement c'est un copolymère de l'éthylène d'un (meth)acrylate d'alkyle et d'un époxyde insaturé.

De préférence le (méth)acrylate d'alkyle est tel que l'alkyle possède 2 à 10 atomes de carbone.

Le MFI (indice de fluidité à l'état fondu) peut être par exemple entre 0,1 et 50 (g/10 min à 190°C sous 2,16 kg).

Des exemples d'acrylate ou methacrylate d'alkyle utilisables sont notamment le methacrylate de méthyle, l'acrylate d'éthyle, l'acrylate de n-butyle, l'acrylate d'isobutyle, l'acrylate de 2-éthylhexyle. Des exemples d'époxydes insaturés utilisables sont notamment :
- les esters et éthers de glycidyle aliphatiques tels que l'allylglycidyléther, le vinylglycidyléther, le maléate et l'itaconate de glycidyle, l'acrylate et le methacrylate de glycidyle, et
- les esters et éthers de glycidyle alicycliques tels que le 2-cyclohexène-l-glycidyléther, le cyclohexène-4,5-diglycidylcarboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

### Exemples

On a utilisé les polymères fluorés suivants :
**Kynar® ADX 120 :** PVDF homopolymère greffé par l'anhydride maléique (contenant 0,6% d'anhydride) et vendu par ATOFINA et de MVI (Melt Volume Index ou indice de fluidité en volume à l'état fondu) 7 cm³/10 min (230°C, 5 kg).

On a utilisé la polyoléfine fonctionnelle suivante :
**Lotader® 8840 :** copolymère de l'éthylène et du méthacrylate de glycidyle de la société ATOFINA et de MVI (Melt Volume Index ou indice de fluidité en volume à l'état fondu) 5 cm³/10 min (190 2,16 kg). Il contient 92% d'éthylène et 8% de méthacrylate de glycidyle en poids.

### Préparation de l'ADX 120

On prépare un mélange de PVDF Kynar® 720 de la société ARKEMA et de 1,2% en masse d'anhydride maléique. Ce mélange est préparé en utilisant une extrudeuse bi-vis fonctionnant à 230°C et 150 tr/minute à un débit de 10 kg/h. Le produit granulé ainsi préparé et ensaché dans des sacs étanches en aluminium, puis l'oxygène est éliminé à l'aide d'un balayage avec un courant d'argon. Ces sacs sont ensuite irradiés par un rayonnement gamma (bombe au Cobalt 60) sous 3 Mrad (accélération de 10 MeV) pendant 17 heures. Un taux de greffage de 50 % est déterminé, ce taux est vérifié après une étape de solubilisation dans la N-méthyl pyrrolidone puis précipitation dans un mélange eau/THF (50/50 en poids). Le produit obtenu après l'opération de greffage est alors placé sous vide pendant une nuit à 130°C pour évacuer l'anhydride maléique résiduel et l'acide fluorhydrique libéré lors de l'irradiation.

La teneur finale en anhydride maléïque greffé est de 0,6% (analyse par spectroscopie infrarouge sur la bande C=0 vers 1870 cm⁻¹).

### Exemple 1 (suivant l'invention) :

Sur une extrudeuse BEKUM à une température de coextrusion de 230°C une bouteille d'un litre comportant 3 couches est réalisée à partir de Finathene MS 201 BN (2 mm), coextrudée sur une couche de Lotader 8840 (100 µm) elle-même coextrudée sur une couche de Kynar ADX 120 (300 µm). L'interface entre le Lotader et le PE n'est pas pelable. L'interface entre le Lotader et le Kynar AD X 120 présente une adhésion de 60 N/cm. Cette bouteille est remplie d'acide sulfurique à 93% et, maintenue à une température de 75°C pendant 1 mois. Aucune délamination n'est observable et la structure conserve son intégrité.

### Exemple 2 (comparatif)

Sur une extrudeuse BEKUM à une température de 230°C une bouteille d'un litre comportant 1 couche de PE Finathene MS 201 BN de 2,4 mm d'épaisseur est extrudée. Cette bouteille est remplie d'acide sulfurique à 93% et placée à 75°C pendant 1 mois, On observe un jaunissement de la bouteille ainsi qu'une apparition de fissures.

## Revendications

1. Utilisation pour le stockage et le transport de produits chimiques d'une structure comprenant :
une couche intérieure en contact avec le fluide à transporter constituée de polymère fluoré sur lequel a été greffé par irradiation un monomère insaturé et directement attachée à celle ci une couche extérieure de polyoléfine.

2. Utilisation selon la revendication 1 dans laquelle la couche de polymère fluoré greffé par irradiation est remplacée par une couche d'un mélange de polymère fluoré greffé par irradiation et d'un polymère fluoré, de préférence du PVDF.

3. Utilisation selon la revendication 1 ou 2 dans laquelle la structure comprend une couche de polymère fluoré disposée du coté du polymère fluoré greffé par irradiation.

4. Utilisation pour le stockage et le transport de produits chimiques d'une structure comprenant :
une couche centrale constituée de polymère fluoré greffé par irradiation et directement attachée à celle-ci une couche extérieure de polyoléfine et une couche intérieure de polyoléfine.

5. Utilisation selon la revendication 4 dans laquelle la couche de polymère fluoré greffé par irradiation est remplacée par une couche d'un mélange de polymère fluoré greffé par irradiation et d'un polymère fluoré.

6. Utilisation pour le stockage et le transport de produits chimiques d'une structure comprenant :
une couche centrale constituée de polyoléfine et directement attachée à celle-ci une couche extérieure de polymère fluoré greffé par irradiation et une couche intérieure de polymère fluoré greffé par irradiation.

7. Utilisation selon la revendication 6 dans laquelle au moins l'une des couches de polymère fluoré greffé par irradiation est remplacée par une couche d'un mélange de polymère fluoré greffé par irradiation et d'un polymère fluoré.

8. Utilisation selon la revendication 6 ou 7 dans laquelle au moins l'une des couches de polymère fluoré greffé par irradiation (éventuellement en mélange avec un polymère fluoré) est recouverte d'une couche de polymère fluoré.

9. Utilisation selon l'une quelconque des revendications précédentes dans laquelle on dispose entre la couche de polymère fluoré greffé par irradiation (ou la couche contenant le polymère fluoré greffé par irradiation) et la (ou les) couche(s) de polyoléfine une couche de polyoléfine fonctionnalisée ayant des fonctions capables de réagir avec les fonctions greffées sur le polymère fluoré.

10. Utilisation selon l'une quelconque des revendications précédentes dans laquelle le monomère insaturé possède au moins une double liaison C=C ainsi qu'au moins une fonction polaire qui peut être une fonction acide carboxylique, sel d'acide carboxylique, anhydride d'acide carboxylique, époxyde, ester d'acide carboxylique, silyle, amide carboxylique, hydroxy et isocyanate.

11. Utilisation selon la revendication 10 dans laquelle le monomère insaturé ne possède qu'une seule double liaison C=C.

12. Utilisation selon la revendication 11 dans laquelle le monomère insaturé est un anhydride d'acide carboxylique insaturé.

13. Utilisation selon la revendication 12 dans laquelle le monomère insaturé est l'anhydride maléïque.

14. Utilisation selon la revendication 11 dans laquelle le monomère insaturé est l'acide undécylénique, les undécylénates de zinc, de calcium ou de sodium.

15. Utilisation selon la revendication 9 et 10 dans laquelle la polyoléfine fonctionnelle est soit un copolymère de l'éthylène et d'un époxyde insaturé soit une polyoléfine greffée par un époxyde insaturé.

16. Utilisation selon l'une quelconque des revendications précédentes dans laquelle la couche intérieure en contact avec le fluide à stocker ou à transporter peut contenir du noir de carbone, des nanotubes de carbone ou tout autre additif capable de la rendre conductrice pour éviter l'accumulation d'électricité statique.

17. Structure comprenant :
une couche centrale constituée de polyoléfine et directement attachée à celle-ci une couche extérieure de polymère fluoré greffé par irradiation et une couche intérieure de polymère fluoré greffé par irradiation.

18. Structure selon la revendication 17 dans lequel au moins l'une des couches de polymère fluoré greffé par irradiation est remplacée par une couche d'un mélange de polymère fluoré greffé par irradiation et d'un polymère fluoré.

19. Structure selon la revendication 17 ou 18 dans lequel au moins l'une des couches de polymère fluoré greffé par irradiation (éventuellement en mélange avec un polymère fluoré) est recouverte d'une couche de polymère fluoré.

## Claims

1. Use for storing and transporting chemicals of a structure comprising:
an inner layer in contact with the fluid to be transported, consisting of a fluoropolymer onto which an unsaturated monomer has been grafted by irradiation and, directly attached to the latter, a polyolefin outer layer.

2. Use according to Claim 1, in which the radiation-grafted fluoropolymer layer is replaced with a layer of a blend of a fluoropolymer, preferably PVDF, and of a radiation-grafted fluoropolymer.

3. Use according to Claim 1 or 2, in which the structure comprises a fluoropolymer layer placed beside the radiation-grafted fluoropolymer.

4. Use for storing and transporting chemicals of a structure comprising:
a central layer consisting of a radiation-grafted fluoropolymer and, directly attached to the latter, a polyolefin outer layer and a polyolefin inner layer.

5. Use according to Claim 4, in which the radiaton-grafted fluoropolymer layer is replaced with a layer of a blend of a fluoropolymer and of a radiation-grafted fluoropolymer.

6. Use for storing and transporting chemicals of a structure comprising:
a central layer consisting of a polyolefin and, directly attached to the latter, an outer layer of radiation-grafted fluoropolymer and an inner layer of radiation-grafted fluoropolymer.

7. Use according to Claim 6, in which at least one of the radiation-grafted fluoropolymer layers is replaced with a layer of a blend of a fluoropolymer and of a radiation-grafted fluoropolymer.

8. Use according to Claim 6 or 7, in which at least one of the layers of radiation-grafted fluoropolymer (optionally blended with a fluoropolymer) is covered with a fluoropolymer layer.

9. Use according to any one of the preceding claims, in which a layer of a functionalized polyolefin having functional groups capable of reacting with the functional groups grafted on the fluoropolymer is placed between the radiation-grafted fluoropolymer layer (or the layer containing the radiation-grafted fluoropolymer) and the polyolefin layer (or layers).

10. Use according to any one of the preceding claims, in which the unsaturated monomer possesses at least one double bond C=C and at least one polar functional group which may be a carboxylic acid functional group, a carboxylic acid salt, a carboxylic acid anhydride, an epoxide, a carboxylic acid ester, a silyl, a carboxylic amide, a hydroxyl or isocyanate.

11. Use according to Claim 10, in which the unsaturated monomer possesses only one double bond C=C

12. Use according to Claim 11, in which the unsaturated monomer is an unsaturated carboxylic acid anyhydride.

13. Use according to Claim 12, in which the unsaturated monomer is maleic anhydride.

14. Use according to Claim 14, in which the unsaturated monomer is undecylenic acid or zinc, calcium or sodium undecylenate.

15. Use according to Claim 9 and 10, in which the functional polyolefin is either an ethylene/unsaturated epoxide copolymer or a polyolefin grafted with an unsaturated epoxide.

16. Use according to any one of the preceding claims, in which the inner layer in contact with the fluid to be stored or transported may contain carbon black, carbon nanotubes or any other additive capable of making it conductive in order to prevent the accumulation of static electricity.

17. Structure comprising a central layer consisting of a polyolefin and, directly attached to the latter, an outer layer of radiation-grafted fluoropolymer and an inner layer of radiation-grafted fluoropolymer.

18. Structure according to Claim 17, in which at least one of the radiation-grafted fluoropolymer layers is replaced with a layer of a blend of a fluoropolymer and of a radiation-grafted fluoropolymer.

19. Structure according to Claim 17 or 18, in which at least one of the layers of radiation-grafted fluoropolymer (optionally blended with a fluoropolymer) is covered with a fluoropolymer layer.

## Patentansprüche

1. Verwendung einer Struktur, umfassend:
eine mit dem zu transportierenden Fluid in Berührung stehende innere Schicht aus Fluorpolymer, auf das durch Bestrahlung ein ungesättigtes Monomer aufgepfropft worden ist, und direkt daran gebunden eine äußere Schicht aus Polyolefin,
zur Lagerung und zum Transport von chemischen Produkten.

2. Verwendung nach Anspruch 1, bei der die Schicht aus durch Bestrahlung gepfropftem Fluorpolymer durch eine Schicht aus einer Mischung aus durch Bestrahlung gepfropftem Fluorpolymer und einem Fluorpolymer, vorzugsweise PVDF, ersetzt ist.

3. Verwendung nach Anspruch 1 oder 2, bei der die Struktur eine neben dem durch Bestrahlung gepfropften Fluorpolymer angeordnete Schicht aus Fluorpolymer umfaßt.

4. Verwendung einer Struktur, umfassend:
eine zentrale Schicht aus durch Bestrahlung gepfropftem Fluorpolymer und direkt daran gebunden eine äußere Schicht aus Polyolefin und eine innere Schicht aus Polyolefin,
zur Lagerung und zum Transport von chemischen Produkten.

5. Verwendung nach Anspruch 4, bei der die Schicht aus durch Bestrahlung gepfropftem Fluorpolymer durch eine Schicht aus einer Mischung aus durch Bestrahlung gepfropftem Fluorpolymer und einem Fluorpolymer ersetzt ist.

6. Verwendung einer Struktur, umfassend:
eine zentrale Schicht aus Polyolefin und direkt daran gebunden eine äußere Schicht aus durch Bestrahlung gepfropftem Fluorpolymer und eine innere Schicht aus durch Bestrahlung gepfropftem Fluorpolymer,
zur Lagerung und zum Transport von chemischen Produkten.

7. Verwendung nach Anspruch 6, bei der mindestens eine der Schichten aus durch Bestrahlung gepfropftem Fluorpolymer durch eine Schicht aus einer Mischung aus durch Bestrahlung gepfropftem Fluorpolymer und einem Fluorpolymer ersetzt ist.

8. Verwendung nach Anspruch 6 oder 7, bei der mindestens eine der Schichten aus durch Bestrahlung gepfropftem Fluorpolymer (gegebenenfalls in Abmischung mit einem Fluorpolymer) durch eine Schicht aus Fluorpolymer bedeckt ist.

9. Verwendung nach einem der vorhergehenden Ansprüche, bei der man zwischen der Schicht aus durch Bestrahlung gepfropftem Fluorpolymer (bzw. der das durch Bestrahlung gepfropfte Fluorpolymer enthaltenden Schicht) und der Schicht bzw. den Schichten aus Polyolefin eine Schicht aus funktionalisiertem Polyolefin mit Gruppen, die mit den auf das Fluorpolymer aufgepfropften Funktionen reagieren können, anordnet.

10. Verwendung nach einem der vorhergehenden Ansprüche, bei der das ungesättigte Monomer mindestens eine C=C-Doppelbindung sowie mindestens eine polare Funktion, bei der es sich um eine Carbonsäure-, Carbonsäuresalz-, Carbonsäureanhydrid-, Epoxid-, Carbonsäureester-, Silyl-, Carbonsäureamid-, Hydroxy- und Isocyanatfunktion handeln kann, aufweist.

11. Verwendung nach Anspruch 10, bei der das ungesättigte Monomer nur eine C=C-Doppelbindung aufweist.

12. Verwendung nach Anspruch 11, bei der es sich bei dem ungesättigten Monomer um ein Anhydrid einer ungesättigten Carbonsäure handelt.

13. Verwendung nach Anspruch 12, bei der es sich bei dem ungesättigten Monomer um Maleinsäureanhydrid handelt.

14. Verwendung nach Anspruch 11, bei der es sich bei dem ungesättigten Monomer um Undecylensäure oder Zink-, Calcium- oder Natriumundecylenat handelt.

15. Verwendung nach Anspruch 9 und 10, bei der es sich bei dem funktionellen Polyolefin entweder um ein Copolymer aus Ethylen und einem ungesättigten Epoxid oder ein mit einem ungesättigten Epoxid gepfropftes Polyolefin handelt.

16. Verwendung nach einem der vorhergehenden Ansprüche, bei der die mit dem zu lagernden oder zu transportierenden Fluid in Berührung stehende innere Schicht Ruß, Kohlenstoffnanoröhrchen oder ein beliebiges anderes Additiv, das die Schicht leitfähig machen kann, zur Vermeidung der Ansammlung von statischer Elektrizität enthält.

17. Struktur, umfassend:
eine zentrale Schicht aus Polyolefin und direkt daran gebunden eine äußere Schicht aus durch Bestrahlung gepfropftem Fluorpolymer und eine innere Schicht aus durch Bestrahlung gepfropftem Fluorpolymer.

18. Struktur nach Anspruch 17, bei der mindestens eine der Schichten aus durch Bestrahlung gepfropftem Fluorpolymer durch eine Schicht aus einer Mischung aus durch Bestrahlung gepfropftem Fluorpolymer und einem Fluorpolymer ersetzt ist.

19. Struktur nach Anspruch 17 oder 18, bei der mindestens eine der Schichten aus durch Bestrahlung gepfropftem Fluorpolymer (gegebenenfalls in Abmischung mit einem Fluorpolymer) durch eine Schicht aus Fluorpolymer bedeckt ist.
